# FASCICULE DE BREVET EUROPEEN

(11) **EP 2 411 336 B1**
(45) Date de publication et mention de la délivrance du brevet: **06.05.2015**
(21) Numéro de dépôt: 10711820.0
(22) Date de dépôt: 15.03.2010
(51) Int. Cl.: C02F 1/02, C02F 1/72, C02F 11/08, C02F 1/74

(54) **PROCEDE ET DISPOSITIF DE TRAITEMENT PAR OXYDATION PAR VOIE HUMIDE DE DECHETS LIQUIDES CONTENANT DES CHARGES EN MATIERES MINERALES**
VERFAHREN UND VORRICHTUNG ZUR NASSOXIDATIONSBEHANDLUNG VON MIT MINERALISCHEN MATERIALIEN BELADENEM FLÜSSIGEM ABFALL
METHOD AND DEVICE FOR THE WET OXIDATION TREATMENT OF LIQUID WASTE LADEN WITH MINERAL MATTER

(30) Priorité: 24.03.2009 CH 455092009
(43) Date de publication de la demande: 01.02.2012
(73) Titulaire: Granit Technologies S.A., 1350 Orbe (CH)
(72) Inventeur: CORREA, Boris, CH-1010 Lausanne (CH)
(74) Mandataire: Nithardt, Roland
(86) Numéro de dépôt international: PCT/CH2010/000070
(87) Numéro de publication internationale: WO 2010/108290

(56) Documents cités:
- US-A- 3 661 778
- US-A- 5 183 577
- US-A- 5 417 937
- US-A1- 2008 078 724

## Description

### Domaine technique

La présente invention concerne un procédé de traitement par oxydation par voie humide de déchets liquides contenant des charges en matières minérales, dans lequel :
- on prépare une solution à traiter chargée en substances oxydables,
- on mélange un gaz oxydant à ladite solution,
- on préchauffe le mélange solution à traiter et gaz oxydant dans un premier échangeur de chaleur,
- on chauffe ledit mélange solution à traiter et gaz oxydant dans un réacteur à des températures suffisantes pour oxyder lesdites substances oxydables,
- on effectue une division du flux du mélange traité chaud à la sortie dudit réacteur en un premier fragment de flux et en un second fragment de flux,
- on utilise ledit premier fragment de flux chaud de mélange traité pour réguler la température de préchauffage dudit premier échangeur de chaleur,
- on évacue ledit premier fragment de flux après son utilisation dans le premier échangeur de chaleur.

L'invention concerne également un dispositif de traitement par oxydation par voie humide de déchets liquides contenant des charges en matières minérales, pour la mise en oeuvre du procédé, ce dispositif comportant :
- des moyens agencés pour mélanger un gaz oxydant à une solution à traiter chargée en substances oxydables,
- au moins un premier échangeur de chaleur pour préchauffer le mélange solution à traiter et gaz oxydant,
- au moins un réacteur pour oxyder lesdites substances oxydables contenues dans ledit mélange solution à traiter et gaz oxydant,
- des moyens pour effectuer une division du flux du mélange traité chaud à la sortie dudit réacteur en un premier fragment de flux et en un second fragment de flux,
des moyens pour diriger le premier fragment de flux chaud de mélange traité vers un premier échangeur de chaleur de telle sorte que le premier fragment de flux chaud de mélange traité est utilisé pour réguler la température de préchauffage dudit premier échangeur de chaleur, et des moyens pour évacuer ce premier fragment de flux après son utilisation dans le premier échangeur de chaleur.

### Technique antérieure

Le principe de ce procédé est une solution connue, mais qui présente divers inconvénients pénalisant son exploitation industrielle.

Tout d'abord, le procédé a tendance à provoquer systématiquement un colmatage des échangeurs de chaleur, notamment lorsque la solution chargée à traiter contient une quantité importante d'ions pouvant former des dépôts et/ ou des incrustations, tels que par exemple le calcium (Ca), le magnésium (Mg) le silicium(Si) etc, et lorsque la solution contient un pourcentage important de solides organiques et/ou minéraux en suspension. Les conséquences du colmatage sont des arrêts fréquents et imprévisibles des installations de traitement, ce qui engendre des pertes de productivité réduisant le rendement et engendrant des pertes économiques non négligeables. En outre, chaque arrêt impose l'intervention d'un opérateur-dépanneur qui doit effectuer la réparation et redémarrer l'installation de jour comme de nuit, voire les jours de fêtes. Le coût des interventions est élevé et le redémarrage d'une installation après un arrêt pour cause de panne due au colmatage nécessite une surveillance particulière. Enfin, ce type de panne implique le démontage compliqué et coûteux des échangeurs de chaleur, qui doit être effectué dans un milieu pollué, en présence de substances chimiques dangereuses pour les intervenants qui sont contraints de travailler dans des conditions particulièrement difficiles et dangereuses.

On a actuellement recours à des solutions permettant de réduire les risques de colmatage. Ces solutions consistent à rajouter des adjuvants qui empêchent la formation de dépôts dans les échangeurs de chaleur. Toutefois, ces solutions, qui imposent l'acquisition et l'addition d'adjuvants à contrôler, présentent l'inconvénient d'augmenter de façon importante les coûts d'exploitation des installations de traitement.

Une autre solution qui a été essayée consiste à doubler le système d'échangeurs, ce qui permet de réduire les frais de redémarrage du fait que l'installation ne nécessite pas un refroidissement préliminaire. Cependant, l'investissement initial est considérablement augmenté sachant que le coût des échangeurs à haute pression est très élevé. En outre, le problème du démontage et du nettoyage mécanique et/ou chimique des échangeurs encrassés n'est pas éliminé. De ce fait, cette solution est excessivement coûteuse et pénalisante pour l'exploitant, tant en ce qui concerne l'investissement initial qu'en ce qui concerne l'exploitation et la maintenance des installations.

Le coût d'exploitation est par ailleurs un paramètre majeur et déterminant des installations actuelles. La consommation en énergie pour la mise en pression de la solution à traiter est particulièrement élevée ainsi que les coûts de l'oxydant (oxygène 99% ou air sous pression). La consommation de liquide de refroidissement est également élevée. En outre, les installations actuelles nécessitent souvent le recours à des catalyseurs, ce qui renchérit le coût de l'utilisation et augmente la consommation en gaz oxydant.

On connaît notamment par le brevet US 5 183 577 un procédé de traitement des eaux usées contenant des sels d'ammonium inorganiques. Toutefois le procédé de la présente invention diffère de ce procédé en ce que
- le réacteur est entièrement rempli de liquide et il n'y a pas de séparation de phase dans le réacteur et donc aucun contrôle de niveau nécessaire à effectuer,
- le flux du liquide oxydé, qui est soutiré du réacteur pour préchauffer le flux à traiter avant son entrée dans le réacteur, est constant et fixé préalablement par des diaphragmes en matériel adapté et résistant à un flux contenant de la matière minérale très abrasive,
- la température de préchauffage du liquide est réglée par le débit de la pompe en amont et non par une vanne en aval. Ceci a deux avantages, d'une part, celui d'éviter toute usure de vanne (pas de régulation en décompression) car la régulation s'effectue en compression (donc pas d'usure ni de cavitation) et, d'autre part, celui de réduire au minimum la surface des échangeurs par l'utilisation d'un delta T maximal et éviter complètement le colmatage des échangeurs par une régulation parfaite de la température des échangeurs (dû à la régulation par compression),
- le second flux sortant du réacteur est refroidi pour récupérer l'excédent de chaleur et de liquide de la réaction et ne joue aucune rôle dans la régulation du procédé qui est avant tout une régulation de température en entrée du réacteur et de pression en sortie.

La publication US 2008/078724 a pour objet un système et un procédé destinés à des applications d'oxydation en milieu humide et catalytique, notamment pour le traitement de boues aqueuses contenant un métal et un carbone organique volatil.

Le brevet US 5 417 937 concerne un appareil pour l'oxydation par voie humide de liquides et/ou de boues souillées par des matières organiques comportant un réacteur subdivisé en plusieurs éléments, appareil dans lequel il n'y a pas de séparation de phase, et dans lequel la régulation est effectuée par une vanne en aval (régulation d'un fluide en mode décompression). Dans le dispositif de traitement de la présente invention la température est régulée par un système qui travaille en compression d'un fluide. La sortie de liquide étant fixe, le débit de l'installation découle de la nécessité d'entretenir le système en équilibre en exerçant une force constante sur les diaphragmes par l'action du fluide. Pour modifier le débit il est nécessaire de changer les diaphragmes, opération mécanique difficile qui est très éloignée de la définition de régulation.

### Exposé de l'invention

La présente invention apporte une solution aux problèmes évoqués ci-dessus en proposant un procédé et un dispositif pour traiter, par oxydation par voie humide, des déchets liquides, notamment des déchets liquides très concentrés en demande chimique en oxyde (DCO) qui sont peu ou pas biodégradables et qui contiennent de fortes charges en matières minérales et/ou en matières en suspension. Cela permet à la fois de réduire l'investissement initial au moment de l'installation d'un équipement de traitement et de diminuer les frais d'utilisation et de maintenance tout en garantissant une grande efficacité de traitement, une fiabilité élevée du procédé et du dispositif de mise en oeuvre de ce procédé, une réduction de la consommation en énergie de manière à répondre à une préoccupation écologique et à une recherche économique, une réduction de la consommation en gaz oxydant, une simplification de l'installation et, par conséquent, une diminution des frais de maintenance.
- Dans ce but, le procédé selon l'invention, tel que défini en préambule, est caractérisé en ce que :
- l'on refroidit le second fragment de flux chaud de mélange traité dans un second échangeur de chaleur,
- l'on sépare les gaz de traitement des résidus minéraux du second fragment de flux de mélange traité à la sortie dudit second échangeur de chaleur,
- l'on évacue respectivement les gaz de traitement des résidus minéraux séparés et le second fragment de flux de mélange traité,
- l'on maintient constant le débit du premier fragment de flux de mélange traité chaud dans ledit premier échangeur de chaleur quel que soit le débit de la solution à traiter au moyen d'au moins un diaphragme disposé après la sortie dudit premier fragment de flux du premier échangeur de chaleur lorsque ledit premier fragment de flux a été utilisé et refroidi, et
- l'on définit une double boucle de régulation de la température du premier échangeur de température en réglant le débit de la solution à traiter froide à l'entrée dudit premier échangeur de chaleur en fonction de la température de la solution à traiter chaude à sa sortie de cet échangeur et en fonction de la température du réacteur, ladite température du réacteur déterminant la température du premier fragment de flux chaud de mélange traité avant son utilisation dans ledit premier échangeur de chaleur.

Dans la forme de réalisation préférée du procédé de l'invention l'on effectue le préchauffage du mélange en le portant à une température sensiblement comprise entre 130 et 200°C. Cette température dépend des caractéristiques chimiques du liquide à traiter. Elle doit être déterminée expérimentalement et doit être régulée à une valeur qui reste la plus constante possible, au maximum +/- 10° C.

L'on effectue ensuite le traitement d'oxydation du mélange dans le réacteur à des températures sensiblement comprises entre 260 et 350 °C et sous une pression sensiblement comprise entre 70 et 200 bars.

Le dispositif pour le traitement de déchets liquides selon l'invention tel que défini en préambule est caractérisé en ce qu'il comprend en outre :
- au moins un second échangeur de chaleur pour refroidir le second fragment de flux, et,
- des moyens disposés à la sortie dudit second échangeur de chaleur et agencés pour séparer les gaz de traitement des résidus minéraux du second fragment de flux refroidi avant leur évacuation respective,
- au moins un diaphragme disposé après la sortie dudit premier fragment de flux chaud du premier échangeur de chaleur lorsque ledit premier fragment de flux chaud a été utilisé et refroidi, ledit diaphragme étant agencé pour maintenir constant le débit dudit premier fragment de flux de mélange traité chaud afin de l'utiliser pour réguler la température de préchauffage dudit premier échangeur de chaleur, et
des moyens agencés pour régler le débit de solution à traiter froide à l'entrée dudit premier échangeur de chaleur en fonction de la température de la solution à traiter chaude à sa sortie de cet échangeur et en fonction de la température du réacteur, ladite température du réacteur déterminant la température du premier fragment de flux chaud de mélange traité avant son utilisation dans ledit premier échangeur de chaleur.

Dans une forme de réalisation préférée du dispositif, lesdits moyens agencés pour maintenir constant le débit du premier flux de mélange traité chaud comportent plusieurs diaphragmes disposés dans une colonne et séparés deux à deux par des entretoises.

De préférence, lesdits diaphragmes sont constitués chacun d'une pièce cylindrique comportant un fond pourvu d'une ouverture calibrée et lesdites entretoises sont constituées chacune d'une pièce cylindrique ayant sensiblement les mêmes dimensions que les diaphragmes.

De façon avantageuse, ledit premier échangeur de chaleur comporte un circuit intérieur et un circuit périphérique, ledit circuit intérieur de ce premier échangeur de chaleur étant traversé par le mélange solution à traiter et gaz oxydant, et le circuit périphérique étant parcouru par ledit premier fragment de flux de mélange traité chaud divisé à la sortie dudit réacteur.

Ledit second échangeur de chaleur comporte également un circuit intérieur et un circuit périphérique, ledit circuit intérieur de ce second échangeur de chaleur étant traversé par ledit second fragment de flux de mélange traité chaud divisé à la sortie dudit réacteur, et le circuit périphérique étant parcouru par un liquide de refroidissement.

Dans la forme de réalisation préférée, les moyens disposés à la sortie dudit second échangeur de chaleur et agencés pour séparer les gaz de traitement des résidus minéraux du mélange traité refroidi comportent un dégazeur.

### Description sommaire des dessins

La présente invention et ses avantages apparaîtront mieux dans la description suivante d'un mode de réalisation donné à titre d'exemple non limitatif, en référence aux dessins annexés dans lesquels :
la figure 1 représente une vue schématique générale du dispositif selon l'invention, et
les figures 2A, 2B, 2C, 2D et 2E sont des vues en coupe verticale et transversale représentant une forme de réalisation du diaphragme qui contrôle le débit dudit premier fragment de flux.

### Meilleure manière de réaliser l'invention

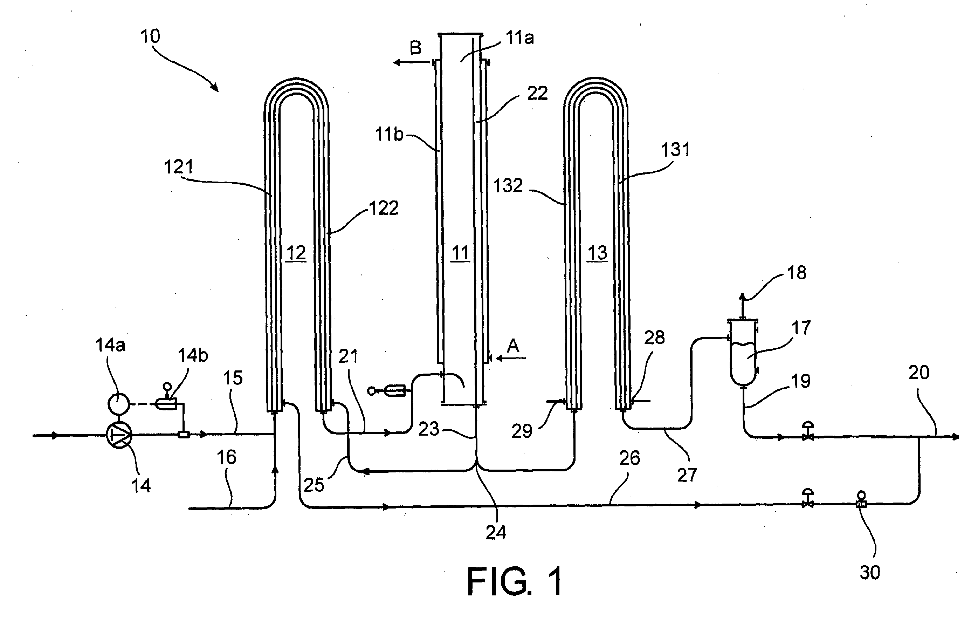

En référence à la figure 1, le dispositif 10 pour le traitement par oxydation par voie humide de déchets liquides comporte principalement au moins un réacteur 11 constitué d'une colonne de traitement, au moins un premier échangeur de chaleur 12 disposé en amont de la colonne de traitement et au moins un second échangeur de chaleur 13 disposé en aval de la colonne de traitement. La colonne de traitement est avantageusement constituée d'une enceinte cylindrique verticale 11 a dans laquelle est injectée la solution à traiter contenant des charges en matières minérales, cette enceinte étant entourée d'un manteau périphérique 11 b destiné à maintenir l'enceinte et son contenu aux températures de traitement prévues pour assurer les réactions d'oxydation selon le procédé d'oxydation par voie humide. A cet effet, le manteau peut par exemple se présenter sous la forme d'une enveloppe creuse dans laquelle circule un fluide caloporteur injecté à la base selon la flèche A et recueilli au sommet selon la flèche B.

Ledit premier échangeur de chaleur 12, dit échangeur de préchauffage, a une fonction de préchauffage de la solution à traiter et de maintien de la température entre des valeurs extrêmes constantes en vue d'éviter des dépôts susceptibles de colmater cet échangeur.

Le dispositif 10 comporte en outre une pompe 14 qui commande l'entrée de la solution à traiter, cette pompe étant entraînée par un moteur 14a piloté par une unité de commande et de régulation 14b, et des moyens pour injecter dans un conduit 15 qui véhicule ladite solution, en amont de l'entrée du premier échangeur de chaleur 12, un gaz oxydant sous pression et à température contrôlée, tel que de l'air ou de l'oxygène sous pression, dans un conduit 16 connecté au conduit 15.

Enfin le dispositif 10 comporte un dégazeur 17, disposé en aval du second échangeur de chaleur 13 et qui est agencé pour évacuer les gaz issus du procédé de traitement, par une sortie haute 18, vers une unité de traitement des gaz (non représentés) et pour évacuer les résidus minéraux débarrassés de toutes les substances organiques qui ont été oxydées au cours du traitement, par exemple par une sortie basse 19 au travers d'un conduit 20, vers une unité biologique de valorisation des déchets (non représentés).

Les échangeurs de chaleur 12 et 13 sont représentés sous la forme d'éléments ayant un profil en U inversé avec deux branches verticales. Le premier échangeur de chaleur 12 comprend un circuit intérieur 121 et un circuit périphérique 122. Le second échangeur de chaleur 13 comprend également un circuit intérieur 131 et un circuit périphérique 132. Le circuit intérieur 121 du premier échangeur de chaleur 12 est alimenté par les conduits 15 et 16 véhiculant respectivement la solution à traiter et le gaz oxydant. Ce mélange traverse ledit premier échangeur de chaleur 12 et pénètre dans un conduit 21 pour être injecté à la base de l'enceinte cylindrique verticale 11a de la colonne de traitement du réacteur 11. Le mélange traité par oxydation à l'intérieur de cette colonne de traitement est capté dans la partie supérieure, par un canal vertical 22 monté dans l'enceinte cylindrique verticale 11a, pour déboucher dans un conduit extérieur 23 jusqu'à un point 24 de division des flux.

Une première partie du flux de mélange traitée chaude est utilisée dans le premier échangeur 12 et, à cet effet, est injectée par un conduit 25 dans le circuit périphérique 121 dudit premier échangeur de chaleur 12 avant d'être évacuée après utilisation, par un conduit de sortie 26, en direction de l'unité biologique de valorisation des déchets, par le conduit 20. Une seconde partie du flux divisé au niveau du point 24 de division des flux est injectée dans le circuit intérieur 132 dudit second échangeur de chaleur 13, d'où il ressort après refroidissement, par un conduit 27, dans le dégazeur 17 évoqué ci-dessus. Au moins un diaphragme 31 est disposé après la sortie du premier fragment de flux chaud de ce premier échangeur de chaleur 12.

Ledit second échangeur de chaleur 13 comporte par ailleurs une entrée 28 de liquide de refroidissement qui est connectée au circuit périphérique 132, à la base d'une des branches verticales de cet échangeur 13, et une sortie 29 de ce liquide de refroidissement disposée à la base de l'autre branche verticale dudit échangeur de chaleur 13.

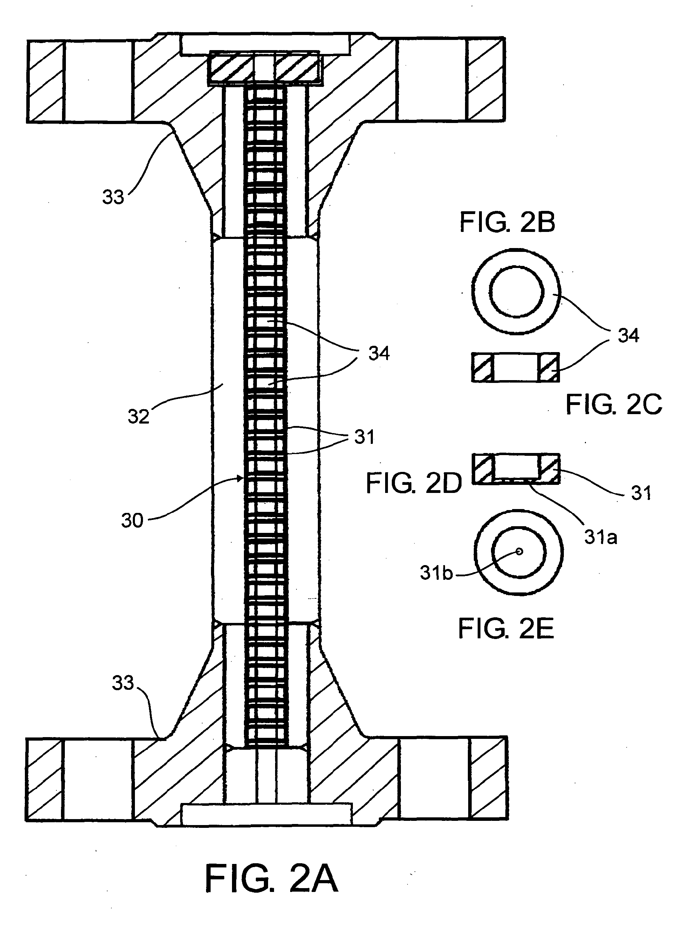

Les figures 2A à 2E représentent des vues en coupe longitudinale et en coupe transversale d'une colonne 30 de diaphragmes 31 destinés à assurer la régulation du premier flux de mélange traité refroidi à sa sortie du premier échangeur de chaleur 12, en permettant d'ajuster les pertes de charges pour maintenir un débit constant. La colonne est montée à l'intérieur d'un support 32 pourvu, à ses extrémités de deux flasques de fixation 33. La colonne 30 se compose d'une série de diaphragmes 31 qui sont deux à deux séparés par des entretoises 34. Une entretoise 34 est représentée en plan par la figure 2B et en coupe transversale par la figure 2C. Ces entretoises sont constituées par une pièce cylindrique servant à définir un espace prédéterminé entre les diaphragmes. Les diaphragmes 31 tels que celui illustré en coupe transversale par la figure 2D et en plan par la figure 2E, ont également un profil essentiellement cylindrique qui a les mêmes dimensions que celui des entretoises 34. Toutefois, ils comportent un fond 31 a fermé pourvu d'une ouverture calibrée 31b qui définit le débit du flux traversant. Ce dispositif permet d'assurer la régulation du flux, selon le nombre de diaphragmes 31 montés dans la colonne 30 et selon la section des ouvertures calibrées 31b.

En mode opératoire, le dispositif décrit ci-dessus assure une régulation stricte de la température de l'échangeur ou des échangeurs de préchauffage, selon la construction réalisée, grâce au principe de la division des flux à la sortie du réacteur, ce qui permet d'éviter la formation de dépôts. Cette formation des dépôts qui, dans les installations existantes, nécessite le démontage et la décolmatage de l'échangeur de préchauffage s'effectue dès que les températures sortent des limites qui sont comprises sensiblement entre 130 et 200°C et en particulier s'élèvent au-dessus de 200°C. La régulation de température de l'échangeur de préchauffage 12 se fait par la régulation du débit de l'effluent froid, grâce à la division des flux à la sortie du réacteur. Dans les installations connues, la régulation de la température de préchauffage s'effectue par l'effluent chaud, ce qui aboutit à un résultat mal maitrisé qui a pour conséquence grave la formation de dépôts dans l'échangeur.

Dans la pratique, cette régulation de la température s'effectue de la manière suivante :
- on divise le flux de mélange traité chaud en deux fragments de flux à la sortie du réacteur ;
- on dirige le premier fragment de flux vers ledit premier échangeur de chaleur, dit échangeur de préchauffage, et le second fragment de flux vers ledit second échangeur de chaleur, dit échangeur de refroidissement ;
- la division du flux est faite de manière particulière et à une pression de réaction dans le réacteur afin que le débit du premier fragment de flux reste constant quel que soit le débit de la solution à traiter. Cette division est obtenue par au moins un et de préférence une série de diaphragmes (voir figures 2) qui sont installés après la sortie du premier flux refroidi de l'échangeur de préchauffage. Ce système permet d'ajuster les pertes de charges en vue de maintenir le débit constant, avec comme conséquence que tout excès de liquide sera évacué vers l'échangeur de refroidissement. La perte de charge individuelle de chaque diaphragme, lorsque le dispositif comporte une série de diaphragmes, est faible, de l'ordre de 1 à 8 bars. La construction de ces diaphragmes est simple puisqu'il s'agit de cylindres comportant une chambre de turbulence et ayant des ouvertures calibrées pour la sortie du liquide, le nombre et les dimensions de ces cylindres étant définis selon la pression de fonctionnement et les débits que l'on souhaite obtenir.

Cette manière de procéder définit ainsi une double boucle de régulation de la température du premier échangeur de température puisque l'on règle le débit de solution à traiter froide à l'entrée dudit premier échangeur de chaleur en fonction de la température de la solution à traiter chaude à sa sortie de cet échangeur et en fonction de la température du réacteur, ladite température du réacteur déterminant la température du premier fragment de flux chaud de mélange traité avant son utilisation dans ledit premier échangeur de chaleur. In est bien entendu que diverses variantes de réalisations pourraient être imaginées. Bien que le dispositif soit représenté schématiquement avec un seul premier échangeur de préchauffage et un seul second échangeur de refroidissement, pour des installations très importantes, plusieurs échangeurs de préchauffage, par exemple, pourraient être installés. La forme des éléments pourrait être variée en fonction des besoins spécifiques d'une unité de traitement et des objectifs recherchés pour le traitement d'une composition particulière de déchets.

## Revendications

1. Procédé de traitement par oxydation par voie humide de déchets liquides contenant des charges en matières minérales, dans lequel :
- on prépare une solution à traiter chargée en substances oxydables,
- on mélange un gaz oxydant à ladite solution,
- on préchauffe le mélange solution à traiter et gaz oxydant dans un premier échangeur de chaleur (12),
- on chauffe ledit mélange solution à traiter et gaz oxydant dans un réacteur (11) à des températures suffisantes pour oxyder lesdites substances oxydables,
- on effectue une division du flux du mélange traité chaud à la sortie dudit réacteur (11) en un premier fragment de flux et en un second fragment de flux,
- -on utilise ledit premier fragment de flux chaud de mélange traité pour réguler la température de préchauffage dudit premier échangeur de chaleur (12),
- on évacue ledit premier fragment de flux après son utilisation dans le premier échangeur de chaleur (12),
**caractérisé en ce que** :
- l'on refroidit le second fragment de flux chaud de mélange traité dans un second échangeur de chaleur (13),
- l'on sépare les gaz de traitement des résidus minéraux du second fragment de flux de mélange traité à la sortie dudit second échangeur de chaleur (13),
- l'on évacue respectivement les gaz de traitement des résidus minéraux séparés et le second fragment de flux de mélange traité,
- l'on maintient constant le débit du premier fragment de flux de mélange traité chaud dans ledit premier échangeur de chaleur (12) quel que soit le débit de la solution à traiter au moyen d'au moins un diaphragme (31) disposé après la sortie dudit premier fragment de flux du premier échangeur de chaleur (12) lorsque ledit premier fragment de flux a été utilisé et refroidi, et
- l'on définit une double boucle de régulation de la température du premier échangeur de température (12) en réglant le débit de la solution à traiter froide à l'entrée dudit premier échangeur de chaleur (12) en fonction de la température de la solution à traiter chaude à sa sortie de cet échangeur (12) et en fonction de la température du réacteur (11), ladite température du réacteur (11) déterminant la température du premier fragment de flux chaud de mélange traité avant son utilisation dans ledit premier échangeur de chaleur (12).

2. Procédé selon la revendication 1, **caractérisé en ce que** l'on effectue le préchauffage du mélange en le portant à une température sensiblement comprise entre 130 et 200°C.

3. Procédé selon la revendication 1, **caractérisé en ce que** l'on effectue le traitement d'oxydation dans le réacteur à des températures sensiblement comprises entre 260 et 350°C.

4. Procédé selon la revendication 1, **caractérisé en ce que** l'on effectue le traitement d'oxydation du mélange sous une pression sensiblement comprise entre 70 et 200 bars.

5. Dispositif (10) de traitement par oxydation par voie humide de déchets liquides contenant des charges en matières minérales, pour la mise en oeuvre du procédé selon les revendications 1 à 4, ce dispositif comportant :
- des moyens agencés pour mélanger un gaz oxydant à une solution à traiter chargée en substances oxydables,
- au moins un premier échangeur de chaleur (12) pour préchauffer le mélange solution à traiter et gaz oxydant,
- au moins un réacteur (11) pour oxyder lesdites substances oxydables contenues dans ledit mélange solution à traiter et gaz oxydant,
- des moyens (24) pour effectuer une division du flux du mélange traité chaud à la sortie dudit réacteur (11) en un premier fragment de flux et en un second fragment de flux,
- des moyens pour diriger le premier fragment de flux chaud de mélange traité vers un premier échangeur de chaleur (12) de telle sorte que le premier fragment de flux chaud de mélange traité est utilisé pour réguler la température de préchauffage dudit premier échangeur de chaleur (12), et des moyens pour évacuer ce premier fragment de flux après son utilisation dans le premier échangeur de chaleur (12),
**caractérisé en ce qu'**il comprend en outre :
- au moins un second échangeur de chaleur (13) pour refroidir le second fragment de flux, et,
- des moyens (17) disposés à la sortie dudit second échangeur de chaleur (13) et agencés pour séparer les gaz de traitement des résidus minéraux du second fragment de flux refroidi avant leur évacuation respective,
- au moins un diaphragme (31) disposé après la sortie dudit premier fragment de flux chaud du premier échangeur de chaleur (12) lorsque ledit premier fragment de flux chaud a été utilisé et refroidi, ledit diaphragme (31) étant agencé pour maintenir constant le débit dudit premier fragment de flux de mélange traité chaud afin de l'utiliser pour réguler la température de préchauffage dudit premier échangeur de chaleur (12), et
- des moyens (14, 14a, 14b) agencés pour régler le débit de solution à traiter froide à l'entrée dudit premier échangeur de chaleur (12) en fonction de la température de la solution à traiter chaude à sa sortie de cet échangeur (12) et en fonction de la température du réacteur (11), ladite température du réacteur (11) déterminant la température du premier fragment de flux chaud de mélange traité avant son utilisation dans ledit premier échangeur de chaleur (12).

6. Dispositif selon la revendication 5, **caractérisé en ce qu'**il comporte plusieurs diaphragmes (31) disposés dans une colonne (30) et séparés deux à deux par des entretoises (34).

7. Dispositif selon la revendication 6, **caractérisé en ce que** lesdits diaphragmes (31) sont constitués chacun d'une pièce cylindrique comportant un fond (31 a) pourvu d'une ouverture calibrée (31 b).

8. Dispositif selon la revendication 6, **caractérisé en ce que** lesdites entretoises (34) sont constituées chacune d'une pièce cylindrique ayant sensiblement les mêmes dimensions que les diaphragmes (31).

9. Dispositif selon la revendication 5, **caractérisé en ce que** ledit premier échangeur de chaleur (12) comporte un circuit intérieur (123) et un circuit périphérique (124), **en ce que** ledit circuit intérieur (123) de ce premier échangeur de chaleur est traversé par le mélange solution à traiter et gaz oxydant, et **en ce que** le circuit périphérique (124) est parcouru par ledit premier fragment de flux de mélange traité chaud divisé à la sortie dudit réacteur (11).

10. Dispositif selon la revendication 5, **caractérisé en ce que** ledit second échangeur de chaleur (13) comporte un circuit intérieur (133) et un circuit périphérique (134), **en ce que** ledit circuit intérieur (133) de ce second échangeur de chaleur est traversé par ledit second fragment de flux de mélange traité chaud divisé à la sortie dudit réacteur (11), et **en ce que** le circuit périphérique (134) est parcouru par un liquide de refroidissement.

11. Dispositif selon la revendication 5, **caractérisé en ce que** les moyens disposés à la sortie dudit second échangeur de chaleur (13) et agencés pour séparer les gaz de traitement des résidus minéraux du mélange traité refroidi comportent un dégazeur (17).

## Patentansprüche

1. Verfahren zur Nassoxidationsbehandlung einer Abfalllösung, die Mineralstofflasten enthält, wobei:
- eine zu behandelnde Lösung, die mit oxidierbaren Substanzen belastet ist, angesetzt wird,
- ein oxidierendes Gases mit der Lösung gemischt wird,
- das Gemisch aus zu behandelnder Lösung und oxidierendem Gas in einem ersten Wärmetauscher (12) vorgewärmt wird,
- das Gemisch aus zu behandelnder Lösung und oxidierendem Gas in einem Reaktor (11) auf Temperaturen erhitzt wird, die ausreichen, um die oxidierbaren Substanzen zu oxidieren,
- eine Teilung des Flusses des heißen behandelten Gemischs am Ausgang des Reaktors (11) in ein erstes Flussfragment und in ein zweites Flussfragment vorgenommen wird,
- das erste heiße Flussfragment des behandelten Gemischs verwendet wird, um die Vorwärmtemperatur des ersten Wärmetauschers (12) zu regeln,
- das erste Flussfragment nach seiner Verwendung in dem ersten Wärmetauscher (12) abgeführt wird,
**dadurch gekennzeichnet, dass**
- das zweite heiße Flussfragment des behandelten Gemischs in einem zweiten Wärmetauscher (13) abgekühlt wird,
- die Behandlungsgase der Mineralrückstände des zweiten Flussfragments des behandelten Gemischs am Ausgang - des zweiten Wärmetauschers (13) getrennt werden,
- jeweils die Behandlungsgase der getrennten Mineralrückstände und das zweite Flussfragment des behandelten Gemischs abgeführt werden,
- der Durchsatz des ersten Flussfragments des heißen behandelten Gemischs in dem ersten Wärmetauscher (12) unabhängig von dem Durchsatz der zu behandelnden Lösung anhand mindestens einer Membran (31) konstant gehalten wird, die nach dem Ausgang des ersten Flussfragments des ersten Wärmetauschers (12) angeordnet ist, wenn das erste Flussfragment verwendet und abgekühlt wurde, und
- eine doppelte Regelschleife der Temperatur des ersten Wärmetauschers (12) definiert wird, indem der Durchsatz der zu behandelnden kalten Lösung am Eingang des ersten Wärmetauschers (12) in Abhängigkeit von der Temperatur der zu behandelnden heißen Lösung am Ausgang dieses Wärmetauschers (12) und in Abhängigkeit von der Temperatur des Reaktors (11) geregelt wird, wobei die Temperatur des Reaktors (11) die Temperatur des ersten heißen Flussfragments des behandelten Gemischs vor seiner Verwendung in dem ersten Wärmetauscher (12) bestimmt.

2. Verfahren nach Anspruch 1, **dadurch gekennzeichnet, dass** das Vorwärmen des Gemischs dadurch ausgeführt wird, dass es auf eine Temperatur gebracht wird, die im Wesentlichen zwischen 130 und 200°C liegt.

3. Verfahren nach Anspruch 1, **dadurch gekennzeichnet, dass** die Oxidierungsbehandlung in dem Reaktor auf Temperaturen erfolgt, die im Wesentlichen zwischen 260 und 350°C liegen.

4. Verfahren nach Anspruch 1, **dadurch gekennzeichnet, dass** die Oxidierungsbehandlung des Gemischs unter einem Druck erfolgt, der im Wesentlichen zwischen 70 und 200 bar liegt.

5. Vorrichtung (10) zur Nassoxidationsbehandlung einer Abfalllösung, die Mineralstofflasten enthält, zur Durchführung des Verfahrens nach Anspruch 1 bis 4, wobei die Vorrichtung Folgendes umfasst:
- Mittel, die eingerichtet sind, um ein oxidierendes Gas mit einer zu behandelnden Lösung, die mit oxidierbaren Substanzen belastet ist, zu mischen,
- mindestens einen ersten Wärmetauscher (12) zum Vorwärmen des Gemischs aus zu behandelnder Lösung und oxidierendem Gas,
- mindestens einen Reaktor (11) zum Oxidieren der oxidierbaren Substanzen, die in dem Gemisch aus zu behandelnder Lösung und oxidierendem Gas enthalten sind,
- Mittel (24) zum Ausführen einer Teilung des heißen behandelten Gemischs am Ausgang des Reaktors (11) in ein erstes Flussfragment und in ein zweites Flussfragment,
- Mittel zum Leiten des ersten heißen Flussfragments des behandelten Gemischs zu einem ersten Wärmetauscher (12), so dass das erste heiße Flussfragment des behandelten Gemischs verwendet wird, um die Vorwärmtemperatur des ersten Wärmetauschers (12) zu regeln, und Mittel zum Abführen dieses ersten Flussfragments nach seiner Verwendung in dem ersten Wärmetauscher (12),
**dadurch gekennzeichnet, dass** sie ferner Folgendes umfasst:
- mindestens einen zweiten Wärmetauscher (13), um das zweite Flussfragment abzukühlen, und
- Mittel (17), die am Ausgang des zweiten Wärmetauschers (13) angeordnet und eingerichtet sind, um die Behandlungsgase der Mineralrückstände des zweiten abgekühlten Flussfragments vor ihrer jeweiligen Abführung zu trennen,
- mindestens eine Membran (31), die nach dem Ausgang des ersten heißen Flussfragments des ersten Wärmetauschers (12) angeordnet ist, wenn das erste heiße Flussfragment verwendet und abgekühlt wurde, wobei die Membran (31) eingerichtet ist, um den Durchsatz des ersten Flussfragments des heißen behandelten Gemischs konstant zu halten, um die Vorwärmtemperatur des ersten Wärmetauschers (12) zu regeln, und
- Mittel (14, 14a, 14b), die eingerichtet sind, um den Durchsatz der zu behandelnden kalten Lösung am Eingang des ersten Wärmetauschers (12) in Abhängigkeit von der Temperatur der zu behandelnden heißen Lösung am Ausgang dieses Wärmetauschers (12) und in Abhängigkeit von der Temperatur des Reaktors (11) zu regeln, wobei die Temperatur des Reaktors (11) die Temperatur des ersten heißen Flussfragments des behandelten Gemischs vor seiner Verwendung in dem ersten Wärmetauscher (12) bestimmt.

6. Vorrichtung nach Anspruch 5, **dadurch gekennzeichnet, dass** sie mehrere Membranen (31) umfasst, die in einer Säule (30) angeordnet und paarweise durch Querstreben (34) getrennt sind.

7. Vorrichtung nach Anspruch 6, **dadurch gekennzeichnet, dass** die Membranen (31) jeweils aus einem zylindrischen Stück bestehen, das einen Boden (31 a) umfasst, der mit einer kalibrierten Öffnung (31 b) versehen ist.

8. Vorrichtung nach Anspruch 6, **dadurch gekennzeichnet, dass** die Querstreben (34) jeweils aus einem zylindrischen Stück bestehen, das im Wesentlichen die gleichen Abmessungen wie die Membranen (31) aufweist.

9. Vorrichtung nach Anspruch 5, **dadurch gekennzeichnet, dass** der erste Wärmetauscher (12) einen inneren Kreislauf (123) und einen umlaufenden Kreislauf (124) umfasst, dass das Gemisch aus zu behandelnder Lösung und oxidierendem Gas durch den inneren Kreislauf (123) dieses ersten Wärmetauschers geht, und dass das erste Flussfragment des heißen behandelten Gemischs, das am Ausgang des Reaktors (11) geteilt wird, durch den umlaufenden Kreislauf (124) fließt.

10. Vorrichtung nach Anspruch 5, **dadurch gekennzeichnet, dass** der zweite Wärmetauscher (13) einen inneren Kreislauf (133) und einen umlaufenden Kreislauf (134) umfasst, dass das zweite Flussfragment des heißen behandelten Gemischs, das am Ausgang des Reaktors (11) geteilt wird, durch den inneren Kreislauf (133) dieses zweiten Wärmetauschers geht, und dass die Kühlflüssigkeit durch den umlaufenden Kreislauf (134) fließt.

11. Vorrichtung nach Anspruch 5, **dadurch gekennzeichnet, dass** die Mittel, die am Ausgang des zweiten Wärmetauschers (13) angeordnet und eingerichtet sind, um die Gase zur Behandlung der Mineralrückstände des abgekühlten behandelten Gemischs zu trennen, einen Entgaser (17) umfassen.

## Claims

1. Wet oxidation treatment method of liquid waste containing mineral substances, in which:
- a solution charged with oxidizable substances is prepared for being treated,
- an oxidizing gas is mixed with said solution,
- the mixture solution to be treated and an oxidizing gas are preheated in a first heat exchanger (12),
- said mixture to be treated and oxidizing gas are heated in a reactor (11) at temperatures that are sufficient to oxidize said oxidizable substances,
- a division of the flow of the hot treated mixture is carried out at the outlet of said reactor (11) into a first flow fragment and into a second flow fragment,
- said first flow fragment of hot treated mixture is used for regulating the preheating temperature of said first heat exchanger (12),
- said first flow fragment is removed after its use in the first heat exchanger (12), **characterised in that**:
- the second flow fragment of hot treated mixture is cooled in a second heat exchanger (13),
- treatment gases are separated from mineral residues in the second flow fragment of treated mixture at the outlet of said second heat exchanger (13),
- treatment gases are respectively removed from separated mineral residues and the second flow fragment of treated mixture,
- the flow rate of the first flow fragment of hot treated mixture is kept constant in said first heat exchanger (12) regardless of the flow rate of the solution to be treated by means of at least one diaphragm (31) arranged after the outlet of said first flow fragment of the first heat exchanger (12) when the said first flow fragment has been used and cooled, and
- a double temperature control loop of the said first temperature exchanger (12) is defined by adjusting the flow of the cold solution to be treated at the inlet of said first heat exchanger (12) as a function of the temperature of the hot solution to be treated when it leaves this exchanger (12) and according to the temperature of the reactor (11), said reactor temperature (11) determining the temperature of the first flow fragment of hot treated mixture prior to its use in said first heat exchanger (12).

2. A method according to claim 1, **characterised in that** the mixture is preheated and kept at a temperature substantially between 130 and 200°C.

3. A method according to claim 1, **characterised in that** the oxidation treatment carried out in the reactor is done at temperatures substantially between 260 and 350°C.

4. A method according to claim 1, **characterised in that** oxidation treatment of the mixture is carried out at a pressure substantially between 70 and 200 bars.

5. A device (10) for the wet oxidation treatment of liquid waste containing mineral substances, in order to apply this method according to claims 1 to 4, this device comprising :
- means arranged to mix an oxidizing gas with a solution to be treated charged with oxidizable substances,
- at least one first heat exchanger (12) to preheat the mixture of solution to be treated and oxidizing gas,
- at least one reactor (11) for oxidizing said oxidizable substances contained in said mixture of solution to be treated and oxidising gas,
- means (24) to perform a division of the flow of hot treated mixture at the outlet of said reactor (11) into a first flow fragment and into a second flow fragment,
- means to direct the first flow fragment of hot treated mixture to a first heat exchanger (12) so that the first flow fragment of hot treated mixture is used to control the preheating temperature of said first heat exchanger (12), and the means to remove this first flow fragment after its use in the first heat exchanger (12),
**characterised in that** it further comprises :
- at least a second heat exchanger (13) for cooling the second flow fragment, and,
- means (17) disposed at the outlet of said second heat exchanger (13) and arranged for separating the treatment gases from the mineral residues of the second flow fragment cooled prior to their respective removal,
- at least one diaphragm (31) arranged after the outlet of said first hot flow fragment of the first heat exchanger (12) when said first hot flow fragment has been used and cooled, said diaphragm (31) being arranged to maintain constant flow of said first flow fragment of hot treated mixture so as to use it to control the preheating temperature of said first heat exchanger (12), and
- means (14, 14a, 14b) arranged to control the flow of the cold solution to be treated, at the inlet of said first heat exchanger (12) as a function of the temperature of the hot solution to be treated upon its exit from this exchanger (12) and according to the temperature of the reactor (11), said reactor temperature (11) determining the temperature of first flow fragment of hot treated mixture prior to its use in said first heat exchanger (12).

6. Device according to claim 5, **characterised in that** it comprises several diaphragms (31) arranged in a column (30) and spaced in pairs by spacers (34).

7. Device according to claim 6, **characterised in that** said diaphragms (31) each comprise a cylindrical member having a base (31 a) provided with a calibrated opening (31 b).

8. Device according to claim 6, **characterised in that** said spacers (34) each comprise a cylindrical member having substantially the same dimensions as the diaphragms (31).

9. Device according to claim 5, **characterised in that** said first heat exchanger (12) comprises an inner circuit (123) and a peripheral circuit (124), **in that** the mixture of solution to be treated and the oxidizing gas passes through said inner circuit (123) of this first heat exchanger, and **in that** said first flow fragment of hot treated mixture which is divided at the outlet of said reactor (11), passes through the peripheral circuit (124).

10. Device according to claim 5, **characterised in that** said second heat exchanger (13) comprises an inner circuit (133) and a peripheral circuit (134), **in that** said second flow fragment of hot treated mixture divided at the outlet of said reactor (11) passes through said inner circuit (133) of this second heat exchanger, and **in that** this peripheral circuit (134) is traversed by a liquid coolant.

11. Device according to claim 5, **characterised in that** the means arranged at the outlet of said second heat exchanger (13) and arranged to separate the treatment gases from the mineral residues of the cooled treated mixture comprises a degassing unit (17).
